# EUROPEAN PATENT SPECIFICATION

(11) **EP 0 264 968 B1**
(45) Date of publication and mention of the grant of the patent: **21.07.1993**
(21) Application number: 87115898.6
(22) Date of filing: 12.04.1984
(51) Int. Cl.: G03G 15/20, G03G 15/00, B65H 3/68

(54) **Electrostatic copying apparatus**
Elektrostatisches Kopiergerät
Appareil à copier électrostatique

(30) Priority: 12.04.1983 JP 63051/83
(43) Date of publication of application: 27.04.1988
(62) Divisional of application: 84104100.7
(73) Proprietor: MITA INDUSTRIAL CO. LTD., Osaka 540 (JP)
(72) Inventor: Iida, Kazumi, Matsubara-shi Osaka-fu (JP); Ohata, Yosuke, Habikino-shi Osaka-fu (JP); Hyodo, Keiichiro, Kobe-shi Hyogo-ken (JP); Akiyama, Kazunori, Takatsuki-shi Osaka-fu (JP); Umeda, Tadashi, Yamato Takada-shi Nara-ken (JP); Kishimoto, Keiichi, Katsuragi-gun Nara-ken (JP)
(74) Representative: Beetz & Partner Patentanwälte

(56) References cited:
- EP-A- 0 006 553
- JP-U-56 003 558
- US-A- 4 046 990
- US-A- 4 144 835
- US-A- 4 145 599
- PATENT ABSTRACTS OF JAPAN, vol. 7, no. 23 (P-171)[1168], 29th January 1983; & JP-A-57 176 077
- PATENT ABSTRACTS OF JAPAN, vol. 6, no. 175 (P-141)[1053], 9th September 1982; & JP-A-57 90 659
- PATENT ABSTRACTS OF JAPAN, vol. 5, no. 161 (P-84)[833], 16th October 1981; & JP-A-56 92 558

## Description

This invention relates to improvements in an electrostatic copying apparatus and specifically to a fixing device as mentioned in the preamble portion of claim 1. Such a fixing device is known from JP-A-57/176 077.

Electrostatic copying apparatuses of the so-called shell type including a lower supporting frame and an upper supporting frame mounted for free pivotal movement between an open position and a closed position have been proposed and come into practical application. Generally, in such a shell-type electrostatic copying apparatus, when the upper supporting frame is held at the open position, at least a considerable portion of a conveying passage for a sheet material such as a copying paper is opened. Hence, if jamming of the sheet material should occur in the conveying passage, it can be easily taken out. However, the conventional shell-type electrostatic copying apparatuses have certain problems to be solved.

It is desired to vary the state of feeding of a sheet material bearing a toner image to the upper and lower rollers depending upon the nature of the sheet material, for example upon whether it is relatively light and has relatively low stiffness as in an ordinary copying paper or whether it is relatively heavy and has relatively high stiffness as in an official postal card. This desire cannot be fully achieved.

JP-A-57/176 077 discloses a fixing device comprising a fixing roller pair composed of an upper and a lower roller cooperating with each other and a guide member disposed upstream of the fixing roller pair, said guide member having a guide portion extending downstream with its downstream end located in proximity to the peripheral surface of the upper roller pair, the upper surface of the guide portion being adapted to guide a sheet material having on its surface a toner image to be fixed to the fixing roller pair.

It is the object of this invention to provide a fixing device in which the state of feeding of a sheet material bearing a toner image to be developed to an upper and a lower roller is varied automatically in the required manner according to the characteristic of the sheet material.

The object is solved by the features of claim 1, further advantageous developments of the invention are described in the dependent claims.

Other objects and advantages of this invention will become apparent from the following description of embodiments of the invention.
Figure 1 is a simplified longitudinal sectional view showing one embodiment of the electrostatic copying apparatus constructed in accordance with this invention;
Figure 2 is a simplified cross sectional view of the electrostatic copying apparatus of Figure 1;
Figure 3 is a simplified view showing a driving system of the electrostatic copying apparatus of Figure 1;
Figure 4 is a simplified view showing a part of the driving system of Figure 3;
Figure 5 is a sectional view showing the vicinity of a fixing device;
Figure 6 is a perspective view showing a guide member;
Figure 7 is a sectional view showing the state in which as sheet material having relatively high stiffness is used.

### DETAILED DESCRIPTION OF PREFERRED EMBODIMENTS

### Outline of the copying apparatus as a whole

The entire structure of one embodiment of the electrostatic copying apparatus which has been improved in various respects in accordance with this invention will first be described.

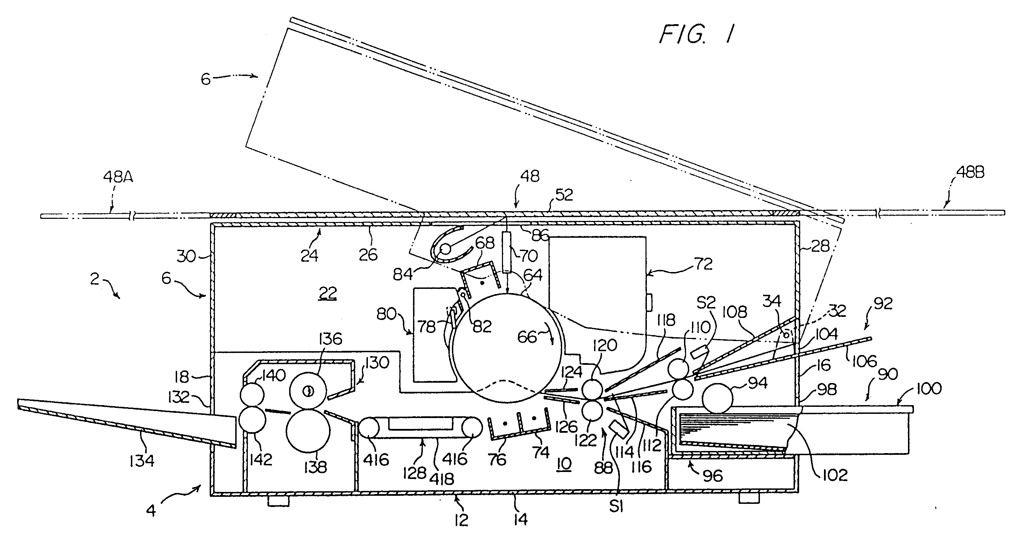

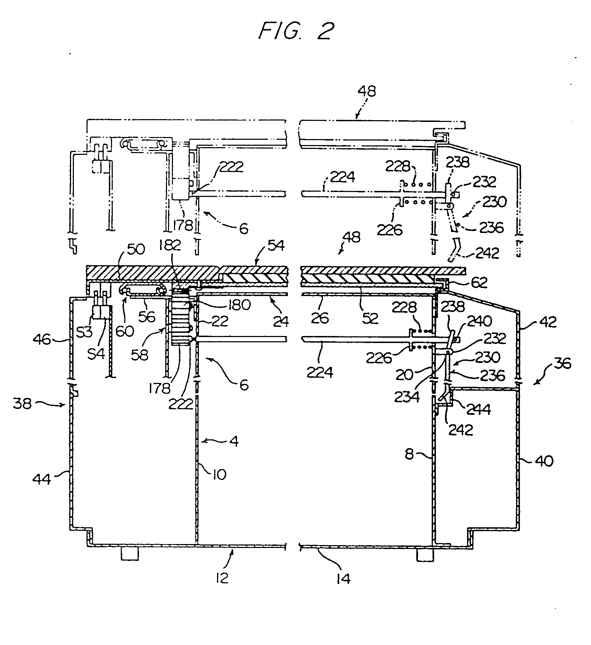

With reference to Figure 1, the illustrated copying apparatus has a nearly rectangular parallelpipedal housing shown generally at 2. The housing 2 is defined by a lower supporting frame 4 and an upper supporting frame 6. With reference to Figure 2 together with Figure 1, the lower supporting frame includes a vertical front base plate 8 and a vertical rear base plate 10 disposed with a predetermined distance there-between in the front-rear direction (a direction perpendicular to the sheet surface in Figure 1, and the left-right direction in Figure 2), and a bottom plate 12 fixed to the lower ends of these plates. The bottom plate 12 has a bottom wall portion 14 defining the bottom surface of the housing 2 and lower surface wall portions 16 and 18 defining the nearly lower half portions of the two side surfaces of the housing 2. On the other hand, the upper supporting frame 6 includes a vertical front base plate 20 and a vertical rear base plate 22 disposed with a predetermined distance there-between in the front-rear direction and a top plate 24 fixed to the upper ends of these Plates. The top plate 24 has a top wall portion 26 defining the top surface of the housing 2 and upper surface wall portions 28 and 30 defining the nearly upper half portions of the two side surfaces of the housing 2. The upper supporting frame 6 is mounted on the lower supporting frame 4 so that it can pivot freely between a closed position shown by solid lines in Figures 1 and 2 and an open position shown by two-dot chain lines in Figures 1 and 2. More specifically, upwardly extending supporting projections 32 are provided at the right end portions of the vertical front base plate 8 and the vertical rear base plate 10 of the lower supporting frame 4, and the vertical front base plate 20 and the vertical rear base plate 22 of the upper supporting frame 6 are pivotally mounted on these supporting projections 32 through a shaft 34. Normally, the upper supporting frame 6 is locked in the closed position shown by the solid lines in Figures 1 and 2 by a suitable locking mechanism (not shown), but as required, can be pivoted to the open position shown by the two-dot chain lines in Figures 1 and 2 with the shaft 34 as a center by cancelling the locking action of the locking mechanism.

In the illustrated copying apparatus, there are also provided a front cover 36 covering the front surface of the housing 2 and a rear cover 38 for covering the rear surface of the housing 2, as shown in Figure 2. The front cover 36 is comprised of a lower front cover 40 fixed to the lower supporting frame 4 and an upper front cover 42 fixed to the upper supporting frame 6. Likewise, the rear cover 38 is comprised of a lower rear cover 44 fixed to the lower supporting frame 4 and an upper rear cover 46 fixed to the upper supporting frame 6. Accordingly, when the upper supporting frame 6 is moved from the closed position to the open position, approximately the upper half portions of the front cover 36 and the rear cover 38, i.e. the upper front cover 42 and the upper rear cover 46, can be moved to the open position in the same way.

A document placing means shown generally at 48 is disposed on the top surface of the housing 2 so that it can reciprocate freely in the left-right direction in Figure 1 or a direction perpendicular to the sheet surface in Figure 2. As clearly shown in Figure 2, the document placing means 48 which may be in a form known per se includes a supporting base plate 50, a transparent plate 52 fixed to the supporting base plate 50, and a document cover 54 (omitted in Figure 1) whose rear edge (left edge in Figure 2) is pivotably mounted on the supporting base plate 50 by a suitably mechanism (not shown). With reference to Figure 2, the method of mounting the document placing means 48 will be described. A supporting member 58 having a horizontal portion 56 is fixed to the rear surface of the vertical rear base plate 22 of the upper supporting frame 6, and between the horizontal portion 56 of the supporting member 58 and the supporting base plate 50 of the document placing means 48 is interposed a sliding mechanism 60 (which may conveniently be one commercially available under the tradename "Aculide") extending in the reciprocating direction of the document placing means 48. On the other hand, a guide member 62 having a rearwardly opened guide groove at its upper portion extending upwardly beyond the top surface of the housing 2 is fixed to the front surface of the vertical front base plate 20 of the upper supporting frame 6. The front edge portion of the transparent plate 52 of the document placing means 48 is slidably received in the guide groove of the guide member 62. Thus, the document placing means 48 is mounted such that it can freely reciprocate between a start-of-scan position shown by a two-dot chain line 48A in Figure 1 and a scan movement limit position shown by a two-dot chain line 48B in Figure 1.

With reference to Figure 1, a rotating drum 64 having a photosensitive member on its peripheral surface is rotatably mounted nearly centrally within the housing 2. Areound the rotating drum 64 adapted to be rotated in the direction of an arrow 66 are disposed a charging corona discharge device 68, an optical unit 70, a latent electrostatic image developing device 72, a transferring corona discharge device 74, a peeling corona discharge device 76, a cleaning device 80 having a cleaning blade 78 and a charge eleminating lamp 82 in this sequence in the rotating direction of the drum 64. In relation to the optical unit 70, a document illuminating lamp 84 is also provided. The document illuminating lamp 84 illuminates a document (not shown) to be copied, placed on the transparent plate 52 of the document placing means 48, through an opening 86 formed at the top wall portion 26 of the top plate 24. The optical unit 70 is constructed by arranging many elongate optical elements extending in the vertical direction (for example, rod-like lenses sold under the tradename "Selfox Microlense" by Nippon Sheet Glass Co., Ltd.), and as shown by an arrow in Figure 1, projects the reflected light from the document onto the peripheral surface of the rotating drum 64.

A sheet material conveying device shown generally at 88 is disposed in the nearly lower half portion of the housing 2. At one end (the right end in Figure 1) of the sheet material conveying device 88 are provided a cassette-type copying paper feed device 90 and a manual sheet feed device 92. The copying paper feed device 90 consists of a combination of a paper cassette receiving section 96 having a feed roller 94 provided therein and a paper cassette 100 to be loaded in the paper cassette receiving section 96 through an opening 98 formed on the right side surface of the housing 2 (more specifically the right side lower surface wall portion 16 of the bottom plate 12), and feeds copying paper sheets one by one from a copying sheet layer 102 accommodated in the cassette 100 by the action of the feed roller 94. The manual feed device 92 includes a guide plate 106 protruding outwardly through an opening 104 formed in the right side surface of the housing 2, a guide plate 108 located above the guide plate 106, and a pair of feed rollers 110 and 112 located downstream of (on the left in Figure 1) the guide plates 106 and 108. When a suitable sheet material such as a sheet-like copying paper is positioned on the guide plate 106 and advanced to the nipping position of the feed rollers 110 and 112, these feed rollers 110 and 112 nips the sheet material and feeds it. The copying paper fed from the copying paper feed device 90 between the guide plates 114 and 116 or the sheet material fed from the manual feed device 92 between the guide plates 114 and 118 is passed between guide plates 124 and 126 by the action of a pair of conveying rollers 120 and 122 and conveyed to a position between the rotating drum 64 and the transferring corona discharge device 74 and the peeling corona discharge device 76. Then, by the action of a suitable conveying belt mechanism 128, it is sent to a fixing device 130. Thereafter, it is discharged into a receiving tray 134 through an opening 132 formed in the left side surface of the housing 2 (more specifically, the left side lower surface wall portion 18 of the bottom plate 12). The fixing device 130 includes a fixing roll pair comprised of an upper roller 136 and a lower roller 138 cooperating with each other (the structure of the fixing device 130 will be described in detail hereinafter). The sheet material from the fixing roller is discharged into the receiving tray 134 by the action of a pair of discharge rollers 140 and 142.

Thus, it will be easily understood with reference to Figure 1 that the guide plate 108, the feed roller 110, the guide plate 118, the conveying roller 120 and the guide plate 124 in the sheet material conveying device 88 are mounted on the upper supporting member 6 together with the rotating drum 64, the charging corona discharge device 68, the optical unit 70, the developing device 72, the cleaning means 80, the charge eliminating lamp 82 and the document illuminating lamp 84. On the other hand, the copying paper feed device 90, the guide plate 106, the feed roller 112, the guide plate 114, the guide plate 116, the conveying roller 122, the guide plate 126, the transferring corona discharge device 74, the peeling corona discharge device 76, the conveying belt mechanism 128, the fixing device 130 and the receiving tray 134 are mounted on the lower supporting frame 4. Accordingly, when the upper supporting frame 6 is moved from the closed position shown by the solid line to the open position shown by the two-dot chain line, most of the conveying passage for the sheet material is opened, and therefore in the event of jamming, the sheet material can be easily taken out from it.

In the copying apparatus described above, the charging corona discharge device 68 charges the photo-sensitive member to a specified polarity substantially uniformly while the rotating drum is rotated in the direction of arrow 66. Then, the image of the document is projected onto the photosensitive member through the optical unit 70 (at this time, the document placing means 48 makes a scanning exposure movement to the right in Figure 1 from the start-of-scan position shown by the two-dot chain line 48A in Figure 1) to form on the photosensitive member a latent electrostatic image corresponding to the document. Thereafter, the developing device 72 applies toner particles to the latent electrostatic image on the photosensitive member to develop it to a toner image. Subsequently, a sheet material such as copying paper fed from the copying paper feed device 90 or the manual sheet feed device 92 is brought into contact with the photosensitive member, and by the action of the transferring corona discharge device 74, the toner image on the photosensitve member is transferred to the sheet material. The sheet material is then peeled off from the photosensitive member by the action of the peeling corona discharge device 76. The sheet material having the toner image transferred thereto is then conveyed to the fixing device 130 where the toner image is fixed. The sheet material having the fixed toner image is then discharged into the receiving tray 134. In the meantime, the rotating drum 64 continues to rotate. The residual toner particles are removed from the photosensitive member by the action of the cleaning device 80, and the residual charge on the photosensitive member is erased by the action of the charge eliminating lamp 82.

### Driving system

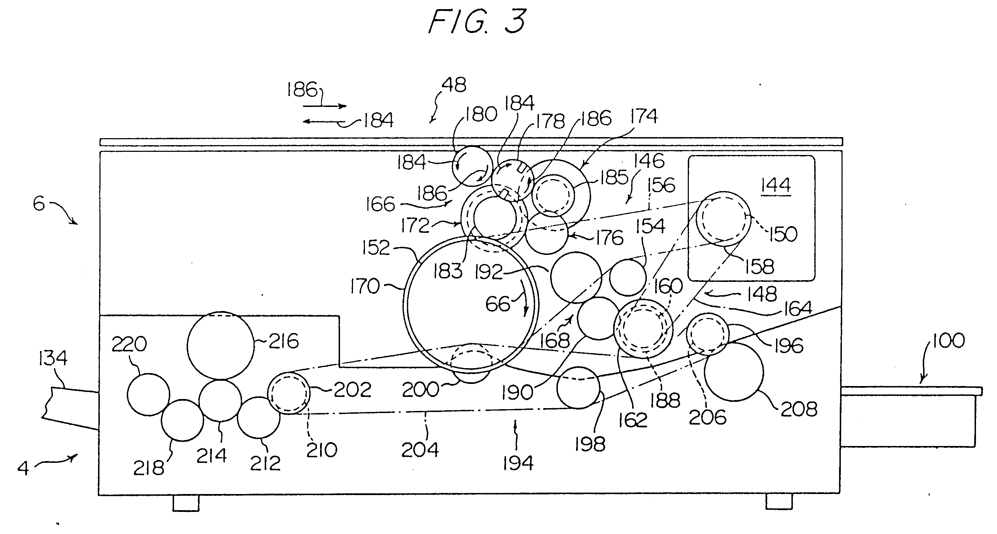

With reference to Figure 3 in conjunction with Figure 1, the driving system in the illustrated copying apparatus will be described in summary.

In the illustrated copying apparatus, a driving source 144 which may be an electric motor is provided in the upper supporting frame 6. In relation to the driving source 144, a power transmission mechanism 146 for the rotating drum and an interlocking power transmission mechanism 148 are provided in the upper supporting frame 6. The power transmission mechanism 146 for the rotating drum includes a toothed pulley 150 fixed to the output shaft of the driving source 144, a toothed pulley 152 linked to the rotating drum 64, a rotatably mounted tensioning toothed pulley 154, and a timing belt 156 wrapped about these toothed pulleys 150, 152 and 154. The interlocking power transmission mechanism 148 includes a sprocket wheel 158 fixed to the output shaft of the driving source 144, a rotatably mounted sprocket wheel 160, a sprocket wheel 162 mounted coaxially, and rotatably as a unit, with the sprocket wheel 160, and a chain 164 wrapped about the sprocket wheels 158 and 160.

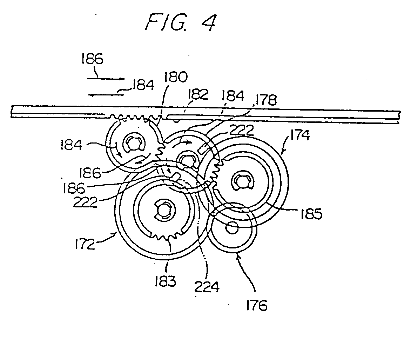

The upper supporting frame 6 further has provided therein a power transmission mechanism 166 for the document placing means and a power transmission mechanism 168 for the developing device. The power transmission mechanism 166 for the document placing means includes a gear 170 mounted coaxially with, and rotatably as a unit with, the toothed pulley 152 in the power transmission mechanism 146 for the rotating drum, a double clutch means 176 comprising a clutch means 172 for normal motion and a clutch means 174 for reverse motion, a gear 178, a pinion gear 180, and a rack 182 (Figures 2 and 4) fixed to the lower surface of the supporting base plate 50 of the document placing means 48. With reference to Figures 3 and 4 in conjunction with Figure 1, the clutch means 172 for normal motion has an input gear 183 in mesh with the gear 170, and the clutch means 174 for reverse motion has an output gear 185 in mesh with the gear 178. The double clutch means 176 comprised of the clutch means 172 and 174 may be substantially the same as the double electromagnetically controlled spring clutch mechanism disclosed in the specification and drawings of co-pending Japanese Patent Appli-ation No. 47120/1983 entitled "Electromagnetically Controlled Spring Clutch Mechanism" filed March 23, 1983. Accordingly, the specification and drawings of the above application are cited as reference instead of giving a detailed description of the structure of the double clutch means 176.

The gear 178 is engaged with the pinion gear 180, and the pinion gear 180 is engaged with the rack 182 extending in the reciprocating direction (the left-right direction in Figures 1, 3 and 4) of the document placing means 48. When the driving source 144 is energized and the gear 170 is rotating in the direction of arrow 66, actuation of the clutch means 172 for normal motion causes the gear 178 and the pinion gear 180 to rotate in the direction shown by an arrow 184, and consequently the document placing means 48 is moved at a predetermined speed V in the direction of arrow 184. On the other hand, when the clutch means 174 for reverse motion is actuated at this time, the gear 178 and the pinion gear 180 are rotated in the direction of an arrow 186, and consequently, the document placing means 48 is moved at a speed double the speed V, i.e. 2V, in the direction of arrow 186.

The power transmission mechanism 168 for the developing device 168 includes a gear 188 rotated coaxially with, and rotatably as a unit with, the sprocket wheels 160 and 162 in the interlocking power transmission mechanism 148, a gear 190 engaged with the gear 188 and a gear 192 engaged with the gear 190. The gear 190 is connected to a sleeve member (to be described hereinafter) provided in the developing device 72.

A power transmission mechanism 194 which has to do with the conveying of a sheet material is mounted on the lower supporting frame 4. The power transmission mechanism 194 includes sprocket wheels 196, 198, 200 and 202 and a chain 204 wrapped about these sprocket wheels 196, 198, 200 and 202. The sprocket wheel 196 is connected to the feed roller 112 (Figure 1). The sprocket wheel 196 also has provided therein a gear 206 coaxially, and rotatably as a unit, with the sprocket wheel 196. A gear 208 is engaged with the gear 206, and the gear 208 is connected to the feed roller 94 (Figure 1) in the paper feed device 90 through a suitable clutch means (not shown) electromagnetically controlled. The sprocket wheel 198 is connected to the conveying roller 122 through a suitable electromagnetically controlled clutch means (not shown). The sprocket wheel 200 is provided so as to keep the chain 204 taut. The sprocket wheel 202 is connected to a driven roller 416 (Figure 1) in the conveying belt mechanism 128. The sprocket wheel 202 has attached thereto a gear 210 coaxial, and rotatably as a unit, with it. A gear 212 is in mesh with the gear 210, and a gear 214 is in mesh with the gear 212. A gear 216 and a gear 218 are kept in mesh with the gear 214, and a gear 220, with the gear 218. The gear 216 is linked to the upper roller 136 (Figure 1) of the fixing device 130, and the gear 220, to a discharge roller 142.

It will be readily understood from Figures 1 and 3 that when the upper supporting frame 6 is held at the closed position, the sprocket wheel 162 of the interlocking power transmission mechanism 148 provided in the upper supporting frame 6 is engaged with the chain 204 of the power transmission mechanism 194 provided in the lower supporting frame 4 and consequently, the driving source 144 is drivingly connected to the power transmission mechanism 194 through the interlocking power transmission mechanism 148. On the other hand, when the upper supporting frame 6 is moved to the open position shown by the two-dot chain line in Figure 1, the sprocket wheel 162 of the interlocking power transmission mechanism 148 is brought out of engagement with the chain 204 of the power transmission mechanism 194.

### Fixing device

In the fixing device used in the electrostatic copying apparatus described above, a toner image on a sheet meterial is fixed on its surface by conveying the sheet material having the toner image transferred in the transferring zone between a pair of fixing rollers. Generally, in such a fixing device, the downstream end of a guide member provided upstream of the pair of fixing rollers for guiding the sheet material to the fixing rollers (i.e., that end of the guide member which is in proximity to the pair of fixing rollers) is positioned above the nip position of the pair of fixing rollers. When the downstream end of the guide member is so positioned, a sheet material of relatively low stiffness which is frequently used is bent by the downstream end of the guide member, and by this bending action, creases of that portion of the sheet material which is introduced between the fixing rollers are straightend, and it is possible to prevent the occurrence of creases on the sheet material during fixing by the fixing rollers. On the other hand, when a sheet material having relatively high stiffness [for example, an official postal card (which is not often used)) is used, the leading end of the sheet material contacts the upper fixing roller in the fixing roller pair and conveying of the sheet material may fail (jamming occurs). Or the trailing end portion of the sheet may abruptly rise upstream of the downstream end of the guide member to disturb the unfixed toner image on the sheet material.

In an attempt to remove the foregoing inconvenience, Japanese Laid-Open Utility Model Publication No. 66947/1978, for example, proposes a fixing device in which a notch or a depressed portion is formed centrally in the downstream end of a guide member for guiding a sheet material to a pair of fixing rollers so that the central portion of the sheet material carried between the fixing rollers can sag down. Elsewhere, Japanese Laid-Open Utility Model Publication No. 3558/1981 proposes a fixing device in which a guide portion for conducting a sheet material having relatively high stiffness to the nipping position of a pair of fixing rollers is provided in a guide member for guiding a sheet material to the fixing rollers.

In the fixing devices disclosed in the specifications of Japanese Laid-Open Utility Model Publications Nos. 66947/1978 and 3558/1981, a sheet material having a relatively small size and relatively high stiffness can be conveyed to near the nip position of the pair of fixing rollers, and the toner image can be fixed on it well. But a sheet material having a relatively small size and relatively low stiffness is not bent at the downstream end of the guide member and creases are likely to form on the sheet material during fixing by the pair of fixing rollers.

The fixing device constructed in accordance with the present invention has the following improvement in order to remove the aforesaid inconvenience.

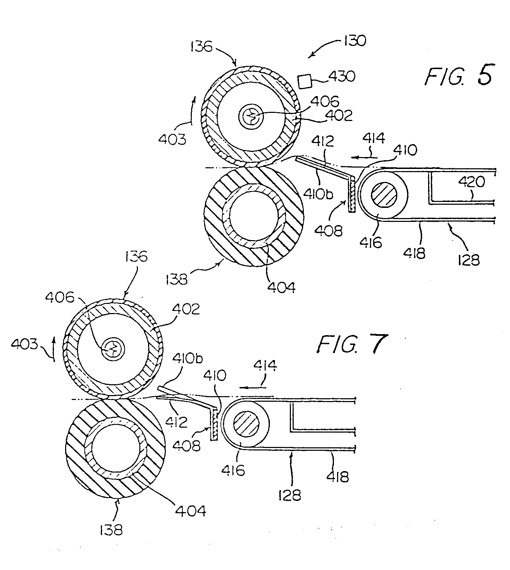

With reference to Figures 5 to 6, the fixing device improved in accordance with this invention will be described below in detail.

With reference to Figure 5, the fixing device 130 has a fixing roller pair composed of an upper roller 136 and a lower roller 138 cooperating with each other. In the illustrated embodiment, the upper roller 136 to be driven in the direction of an arrow 403 is constructed of a cylindrical sleeve member 402 made of aluminum having a surface coated with "Teflon" (a tradename for polytetrafluoroethylene made by E. I. du Pont de Nemours & Co.), and the lower roller 138 is constructed of a metallic pipe member 404 surface-coated with rubber, etc. Within the upper roller 136 is disposed an electrical heating element 406 such as an electric heater for fixing the toner image on the sheet material under heat.

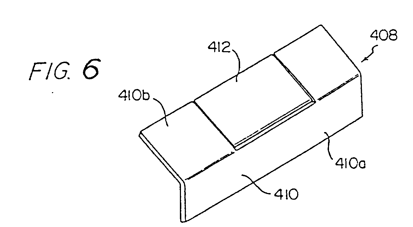

Upstream of the fixing roller pair is disposed a guide member 408 for conducting a sheet material conveyed by the action of the conveyer belt mechanism 128 to the fixing roller pair. As shown in Figure 6, the guide member 408 has a main guide 410 formed of a rigid material such as a metallic material and a guide 412 made of a flexible material. The main guide 410 has a securing portion 410a (constituting the securing portion of the guide member 408) and a guiding portion 410b extending from the securing portion 410a. A rectangular cut having a predetermined width is provided in the central part of the guiding portion 410b in the widthwise direction (the direction perpendicular to the sheet surface in Figure 5 and the direction from left bottom to the right top in Figure 6 ) (more specifically, the cut is formed from the upstream end to the downstream end of the guiding portion 410). The guide 412 is disposed in the aforesaid cut by fixing its upstream end to the securing portion 410a of the main guide 410. Thus, the guide 412 and the guiding portion 410b of the main guide 410 constitutes the guiding portion of the guide member 408, and the guide 412 defines a specified area of the guiding portion of the guide member 408. Preferably, the upper surface of the guide 412 is disposed in the same plane as the upper surface of the guiding portion 410b of the main guide 410. Preferably, the guide 412 of a flexible material is a polyester film having a thickness of about 0.1 mm (for example, those commercially available under the tradenames "Lumilar" and "Mylar"). In the illustrated embodiment, a sheet material having relatively high stiffness is assumed to be an official post card, and the width of the aforesaid specified area is set at about 100 mm (substantially equal to, or slightly larger than, the width of the official post card).

The guide member 408 consisting of the main guide 410 and the guide 412 is fixed to a supporting vertical wall provided in the bottom wall portion 14 which defines the bottom surface of the housing 2 (Figure 1). As is clear from Figure 5, the guiding portion of the guide member 408 extends upwardly inclinedly toward the downstream side (more specifically, toward the downstream side in the conveying direction of the sheet material shown by an arrow 414), and its lower end portion is positioned slightly above the nip position of the fixing roller pair (the upper roller 136 and the lower roller 138) and in proximity to the peripheral surface of the upper roller 136. The upstream end (that end which is in proximity to the conveying belt mechanism 128) of the guiding portion of the guide member 408 is positioned below the nip position of the fixing roller pair.

The illustrated conveying belt mechanism 128 includes a pair of rollers 416 (Figure 1) and an endless conveying belt 418 having a plurality of holes formed therein. The conveyor belt 418 is stretched across the rollers 416, and a suction chamber 420 is disposed between the upper portion (the portion acting for conveying the sheet material) and the lower portion of the conveyor belt 418. That surface of the suction chamber 420 which faces the upper portion of the conveyor belt 418 is opened. The inside of the suction chamber 420 is sucked by a suction motor (not shown), and by the sucking action of the suction motor, the sheet material conveyed on the upper portion of the conveyor belt 418 is attracted to the conveyor belt 418.

In the fixing device 130 described above, the sheet material having a toner image on its upper surface which is conveyed on the conveyor belt 418 is conducted to the fixing roller pair by being guided by the upper surface of the guiding portion of the guide member 408. By the fixing action of the fixing roller pair, the toner image is fixed to the surface of the sheet material.

The operation and advantage of the fixing device 130 including the guide member 408 described above will be described with reference to Figures 5 to 7 .

Let us first assume that a sheet material having a relatively large width (more specifically larger than the width of the aforesaid specified area in the transverse direction) is used. As can be easily understood from Figure 6, the sheet material is raised while being guided mainly by the upper surface of the guiding portion 410b of the main guide 410 of the guide member 408, and thereafter, lowered and conducted to the nip position of the fixing roller pair (the upper roller 136 and the lower roller 138). Accordingly, the sheet material is conveyed as shown by a two-dot chain line in Figure 5 and bent by the downstream end of the guiding portion 410b of the main guide 410. Creases will be straightened by this bending action. As a result, the sheet material can be introduced between the fixing rollers after its creases have been removed, and the occurrence of creases in the sheet material during the fixing operation can be prevented.

Now, let us assume that a sheet material having a relatively small width (more specifically smaller than the width of the aforesaid specified area in the transverse direction) and relatively high stiffness (generally sheet materials having relatively high stiffness mostly have a large weight), for example, an official post card, is used. As can be readily understood from Figure 6, the sheet material is conducted to the nip position of the fixing roller pair by being guided by the upper surface of the guide 412 (the specified area). When the sheet material is guided over the upper surface of the guide 412, the downstream end portion of the guide 412 is bent downwardly by the weight of the sheet material as shown in Figure 7 because the guide 412 is made of a flexible material. Thus, the downstream end of the guide 412 is at nearly the same height as the nip position of the fixing roller pair. Accordingly, the sheet material is conveyed as shown by a two-dot chain line in Figure 7 and conveyed to the nip position of the fixing roller pair nearly in a straight line fashion without being bent by the downstream end of the guide 412. Thus, sheet jamming and disturbance of the unfixed toner image, which may occur when a sheet material having relatively high stiffness is used, can be prevented.

Now, let us assume that a sheet material having a relatively small width (more specifically, smaller than the width of the specified area in the transverse direction) and relatively low stiffness (generally sheet materials having relatively low stiffness have a small weight) is used. The sheet material in this case is brought to the nip position of the fixing roller pair while being guided by the upper surface of the guide 412 (specified area). But since its weight is small, the downstream end portion of the guide 412 is not so much bent downwardly when the sheet material is guided over the upper surface of the guide 412. The sheet material is raised by being guided by the upper surface of the guide 412 and then lowered and conducted to the nip position of the fixing roller pair. Accordingly, the sheet material is conveyed as shown by a two-dot chain line in Figure 5 and bent by the downstream end of the guide 412. Creases in the sheet material will be straightened by this bending action. In this case, too, the sheet material can be passed between the fixing rollers after its creases have been removed.

In the embodiment described above, the guide 412 (specified area) is disposed in the central portion of the guiding portion of the guide member 408 in the widthwise direction. When a sheet material having a relatively small size is to be guided on the upper surface of the left side portion (or the right side portion) in the widthwise direction of the guiding portion of the guide member 408, the guide 412 may be provided in the left side portion (or the right side portion) in the widthwise direction of the guiding portion of the guide member 408.

The above embodiment is applied to a fixing device including an electrical heating element. It can, however, be also applied to a fixing device of the pressure type which is adapted to fix the toner image on the sheet material only by the pressure between the fixing rollers.

## Claims

1. A fixing device for a sheet material having on its surface a toner image to be fixed comprising a fixing roller pair composed of an upper (136) and a lower roller (138) cooperating with each other and a guide member (408) disposed upstream of the fixing roller pair as seen in the conveying direction of the sheet material, said guide member (408) having a guide portion (412, 410b) with its downstream end located in proximity to the peripheral surface of the upper roller pair, the guide portion being adapted to guide the sheet material to fixing roller pair,
characterized in that
the guide portion is formed in a specified area (412) of predetermined width of a flexible material having its upstream end fixed, and in the other area of a rigid material, and in that
the downstream end of the specified area is held approximately at the same level as the nip position of the fixing roller pair, whereby the specified area is bent downwardly by the weight of the sheet material when a relatively heavy sheet material with relatively high stiffness passes only along the specified area.

2. The device of claim 1 wherein the guide portion of the guide member (408) extends upwardly inclinedly toward the downstream side.

3. The device of claim 2 wherein the upstream end of the guide member (408) is located below the nip position of the fixing roller pair (136, 138).

4. The device of one of claims 1 to 3 wherein the specified area exists centrally in the guide portion (408) in the widthwise direction.

5. The device of one of claims 1 to 4 wherein the specified area is formed of a polyester film having a thickness of about 0.1 mm.

## Patentansprüche

1. Eine Fixiereinrichtung für ein Blattmaterial, das auf seiner Oberfläche ein zu fixierendes Tonerbild aufweist, mit einem Fixierwalzenpaar, das aus einer oberen (136) und einer unteren Walze (138) aufgebaut ist, die zusammenwirken, und einem Führungselement (408), das bei Betrachtung in Transportrichtung des Blattmaterials stromaufseitig zum Fixierwalzenpaar angeordnet ist, wobei das Führungselement (408) einen Führungsabschnitt (412, 410b) aufweist, dessen stromabseitiges Ende sich in der Nähe der Umfangsfläche des oberen Walzenpaares befindet, wobei der Führungsabschnitt so beschaffen ist, daß er das Blattmaterial zum Fixierwalzenpaar führt,
dadurch gekennzeichnet, daß
der Führungsabschnitt in einem besonderen Bereich (412) vorgegebener Breite aus einem flexiblen Material, dessen stromaufseitiges Ende befestigt ist, und im anderen Bereich aus einem starren Material gebildet ist und daß das stromabseitige Ende des besonderen Bereichs angenähert auf der gleichen Höhe wie die Walzenspaltposition des Fixierwalzenpaares gehalten wird, wobei der besondere Bereich durch das Gewicht des Blattmaterials nach unten gebogen wird, wenn sich ein verhältnismäßig schweres Blattmaterial mit verhältnismäßig hoher Steifigkeit nur entlang dem besonderen Bereich bewegt.

2. Die Einrichtung von Anspruch 1, in der sich der Führungsabschnitt des Führungselementes (408) nach oben geneigt zur stromabseitigen Seite erstreckt.

3. Die Einrichtung von Anspruch 2, in der sich das stromaufseitige Ende des Führungselementes (408) unterhalb der Walzenspaltposition des Fixierwalzenpaares (136, 138) befindet.

4. Die Einrichtung von einem der Ansprüche 1 bis 3, in der der besondere Bereich in Breitenrichtung des Führungsabschnittes in demselben mittig vorhanden ist.

5. Die Einrichtung von einem der Ansprüche 1 bis 4, in dem der bestimmte Bereich aus einem Polyesterfilm mit einer Dicke von ungefähr 0,1 mm gebildet ist.

## Revendications

1. Un dispositif de fixage pour un matériau en feuille ayant sur sa surface une image en toner devant être fixée, comprenant une paire de rouleaux de fixage composée d'un rouleau supérieur (136) et d'un rouleau inférieur (138) coopérant l'un avec l'autre et d'un organe de guidage (408) disposé en amont de la paire de rouleaux de fixage telle que vue dans la direction de transport du matériau en feuille, ledit organe de guidage (408) ayant une portion de guidage (412, 410b) avec son extrémité aval située à proximité de la surface périphérique du rouleau supérieur, la portion de guidage étant agencée pour guider le matériau en feuille vers la paire de rouleaux de fixage,
caractérisé en ce que
la portion de guidage est formée, dans une surface déterminée (412) de largeur prédéterminée, d'un matériau flexible ayant son extrémité amont fixée et, dans l'autre surface, d'un matériau rigide et en ce que
l'extrémité aval de la surface déterminée est maintenue approximativement au même niveau que la position de pincement de la paire de rouleaux de fixage, grâce à quoi la surface déterminée est courbée vers le bas par le poids du matériau en feuille lorsqu un matériau en feuille relativement lourd à rigidité relativement élevée passe seulement le long de la surface déterminée.

2. Le dispositif de la revendication 1, dans lequel la portion de guidage de l'organe de guidage (408) s'étend vers le haut de manière inclinée vers le côté aval.

3. Le dispositif de la revendication 2, dans lequel l'extrémité amont de l'organe de guidage (408) est située au-dessous de la position de pincement de la paire de rouleaux de fixage (136, 138).

4. Le dispositif de l'une des revendications 1 à 3, dans lequel la surface déterminée existe centralement dans la portion de guidage (408) dans la direction de la largeur.

5. Le dispositif de l'une des revendications 1 à 4, dans lequel la surface déterminée est formée d'un film de polyester ayant une épaisseur d'environ 0,1 mm.
